# EUROPÄISCHE PATENTSCHRIFT

(11) **EP 3 059 478 B1**
(45) Veröffentlichungstag und Bekanntmachung des Hinweises auf die Patenterteilung: **18.04.2018**
(21) Anmeldenummer: 16000135.0
(22) Anmeldetag: 21.01.2016
(51) Int. Cl.: F16K 5/04, G01F 23/64, G01F 23/02

(54) **VORRICHTUNG ZUM ANZEIGEN UND/ODER KONTROLLIEREN VON FLUIDEN**
DEVICE FOR DISPLAYING AND/OR CONTROLLING FLUIDS
DISPOSITIF DESTINE A AFFICHER ET/OU A REGULER DES FLUIDES

(30) Priorität: 18.02.2015 DE 102015202953
(43) Veröffentlichungstag der Anmeldung: 24.08.2016
(60) Teilanmeldung: 18151008.2
(73) Patentinhaber: HYDAC Accessories GmbH, 66280 Sulzbach/Saar (DE)
(72) Erfinder: Käfer, Jürgen, 66578 Schiffweiler (DE); Hanus, Markus, 66386 St. Ingbert (DE)
(74) Vertreter: Bartels und Partner, Patentanwälte

(56) Entgegenhaltungen:
- EP-A1- 2 816 329
- WO-A1-02/48589
- WO-A1-2009/146646
- CN-U- 86 206 620
- DE-A1-102005 018 897
- FR-A- 1 202 564
- GB-A- 571 312
- GB-A- 809 828
- GB-A- 2 040 408
- US-A- 1 005 424
- US-A- 2 510 514
- US-A- 3 497 179
- US-A1- 2011 253 922
- US-B1- 7 066 445

## Beschreibung

Die Erfindung betrifft eine Vorrichtung zum Anzeigen und/oder Kontrollieren von Fluiden mit den Merkmalen im Oberbegriff von Anspruch 1.

Vorrichtungen dieser Art sind bekannt, vergleiche beispielsweise DE 10 2005 018 897 A1. In der Fachsprache bezeichnet man solche Vorrichtungen auch als Flüssigkeitsstandanzeigegeräte, wobei das Flüssigkeitsniveau optisch, beispielsweise durch visuelle Beobachtung, oder elektrisch angezeigt wird, indem ein elektrisches Schaltsignal erzeugt wird. Dieses Schaltsignal kann als Warnmeldung oder zur Regelung des Flüssigkeitsniveaus verwendet werden. Das anzuzeigende oder zu kontrollierende Medium in Form des Fluids gelangt von dem betreffenden, den Vorrat des Fluids enthaltenen Behältnis, üblicherweise einem Tank, über einen Anschlusskörper des Fluidanschlusses der Vorrichtung zu einem das Steigrohr enthaltenden Anzeigegehäuse. Wenn das Steigrohr in der Art eines Anzeigerohres ausgebildet und durchsichtig ist, lässt sich der Flüssigkeitspegel durch unmittelbare visuelle Beobachtung feststellen. Alternativ oder zusätzlich kann im Steigrohr ein Schwimmerkörper vorgesehen sein, der entsprechend dem Niveau des im Behältnis oder Tank befindlichen Fluids steigt oder sinkt. Wenn eine elektrische Signalerzeugung vorgesehen ist, wie dies beispielsweise bei einer aus DE10 2009 007 655 A1 bekannten Lösung der Fall ist, dann löst der Schwimmerkörper durch Einwirkung auf ein Detektorelement, das sich an einem feststehenden Teil der Vorrichtung befindet, einen Schaltvorgang einer elektrischen Schalteinrichtung aus, um eine gewünschte Anzeige zu gewinnen und/oder eine Steuerfunktion auszuüben.

Die CN 86 2 06620 U beschreibt eine Vorrichtung zum Anzeigen und/oder Kontrollieren von Fluiden, die in einem Behälter, wie einem Tank, aufnehmbar sind, mit mindestens einem Fluidanschluss, der über eine Fluidverbindung in ein Steigrohr einmündet, in dem eine dem Fluidniveau im Behälter entsprechende Anzeige ermöglicht ist, wobei zumindest für den einen Fluidanschluss eine Ventileinrichtung vorhanden ist, mittels deren die vom Fluidanschluss in das Steigrohr führende Fluidverbindung steuerbar ist.

US2011/0253922 offenbart eine Vorrichtung nach dem Oberbegriff des Anspruchs 1.

Ausgehend von diesem Stand der Technik stellt sich die Erfindung die Aufgabe, eine Vorrichtung der eingangs genannten Gattung zur Verfügung zu stellen, die sich durch ein besonders günstiges Betriebsverhalten auszeichnet.

Erfindungsgemäß ist diese Aufgabe durch eine Vorrichtung gelöst, die die Merkmale des Patentanspruchs 1 in seiner Gesamtheit aufweist.

Anspruch 1 beansprucht eine Vorrichtung zum Anzeigen und/oder Kontrollieren von Fluiden, die in einem Behälter, wie einem eine Tankwand aufweisenden Tank, aufnehmbar sind, mit mindestens einem Fluidanschluss, der über eine Fluidverbindung in ein Steigrohr mit einem schalenartigen Außengehäuse als Teil der Vorrichtung einmündet, in dem eine, dem Fluidniveau im Behälter entsprechende Anzeige ermöglicht ist, wobei zumindest für den einen Fluidanschluss eine Ventileinrichtung vorhanden ist, mittels deren die vom Fluidanschluss in das Steigrohr führende Fluidverbindung steuerbar ist, wobei die Ventileinrichtung als Absperrhahn mit einem bolzenartigen, in einer Bohrung im Ventilgehäuse drehbaren Küken mit einer zur Drehachse senkrechten Durchgangsbohrung gebildet ist, wobei innerhalb der Bohrung das Küken mittels Dichtringen abgedichtet ist, und wobei die jeweilige Fluidverbindung mit ihren Gehäuseteilen zur Umgebung hin zumindest teilweise abgedichtet in einer ihr zugeordneten Aufnahme geführt ist,dadurch gekennzeichnet,dass das Küken ohne Drehanschlag um 360° in der Bohrung im Ventilgehäuse drehbar ist, dass zur Sicherung gegen Verschieben für ein aus dem Ventilgehäuse vorstehendes Ende des Kükens ein Seegering vorgesehen ist, dass die jeweilige Fluidverbindung mit ihren Gehäuseteilen die jeweilige Aufnahme für das Steigrohr vollständig durchgreift, und dass die Fluidverbindung an einem zu der Tankwand entgegengesetzten, geschlossenen Ende ein Außengewinde mit einer Mutter aufweist mittels deren das schalenartige Außengehäuse an der Aufnahme festgelegt ist.

Nachstehend ist die Erfindung anhand von in der Zeichnung dargestellten Ausführungsbeispielen im Einzelnen erläutert. Es zeigen:
- Fig. 1: eine in Vertikalrichtung verkürzt dargestellte Vorderansicht eines Ausführungsbeispiels der erfindungsgemäßen Vorrichtung;
- Fig. 2: einen Vertikalschnitt entsprechend der Schnittlinie II-II von Fig. 1;
- Fig. 3: eine Untenansicht des unteren Fluidanschlusses des Ausführungsbeispiels;
- Fig. 4: eine in einem gegenüber Fig. 1 bis 3 in etwa doppeltem Maßstab gezeichnete Draufsicht der gesondert dargestellten Fluidverbindung des Ausführungsbeispiels;
- Fig. 5: einen Längsschnitt der Fluidverbindung entsprechend der Schnittlinie V-V von Fig. 4;
- Fig. 6: eine im Maßstab von Fig. 4 gezeichnete Draufsicht der Fluidverbindung eines abgewandelten Ausführungsbeispiels;
- Fig. 7: einen Längsschnitt entsprechend der Schnittlinie VII-VII von Fig. 6;
- Fig. 8: eine im Maßstab von Fig. 4 und 6 gezeichnete Draufsicht der Fluidverbindung eines weiter abgewandelten Ausführungsbeispiels;
- Fig. 9: einen Längsschnitt entsprechend der Schnittlinie IX-IX von Fig. 8;
- Fig. 10: eine in Vertikalrichtung verkürzt dargestellte Vorderansicht eines weiter abgewandelten Ausführungsbeispiels einer nicht erfindungsgemäßen Vorrichtung;
- Fig. 11: einen Längsschnitt entsprechend der Schnittlinie XI-XI von Fig. 10;
- Fig. 12: eine Untenansicht des unteren Fluidanschlusses des Ausführungsbeispiels von Fig. 10 und 11;
- Fig. 13: eine gegenüber den Fig. 10 bis 12 in etwa doppeltem Maßstab gezeichnete Draufsicht einer gesondert dargestellten Fluidverbindung des Ausführungsbeispiels von Fig. 10 bis 12; und
- Fig. 14: einen Längsschnitt entsprechend der Schnittlinie XIV-XIV von Fig. 13.

Bei den in der Zeichnung dargestellten Ausführungsbeispielen weist die Vorrichtung jeweils einen unteren Fluidanschluss 1 und einen oberen Fluidanschluss 3 auf, die jeder über eine Fluidverbindung 5, die gleich ausgebildet sind, mit einem jeweiligen Ende eines sich zwischen ihnen in Vertikalrichtung erstreckenden Steigrohrs 7 in Verbindung sind. Jede Fluidverbindung 5 weist an ihren dem Behälter oder Tank 9 zugeordneten Ende ein Außengewinde 11 auf, mit dem sie mit einer ein Innengewinde aufweisenden Tanköffnung 13 verschraubt ist. In der Zeichnung ist von dem Tank 9 lediglich der Wandabschnitt angedeutet, an dem die Anzeigevorrichtung angebracht ist. Die Tanköffnung 13 für den unteren Fluidanschluss 1 befindet sich an diesem Wandabschnitt in einem unteren Bereich, der unterhalb des Niveaus des im Tank 9 zu bevorratenden Fluids gelegen ist, während sich die Tanköffnung 13 für den oberen Fluidanschluss 3 oberhalb des Fluidniveaus befindet.

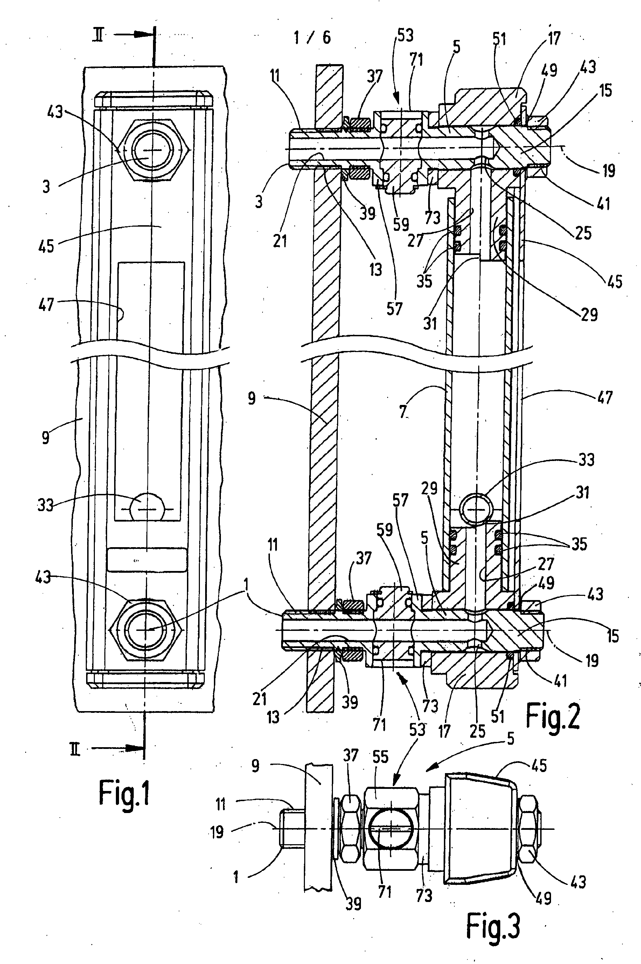

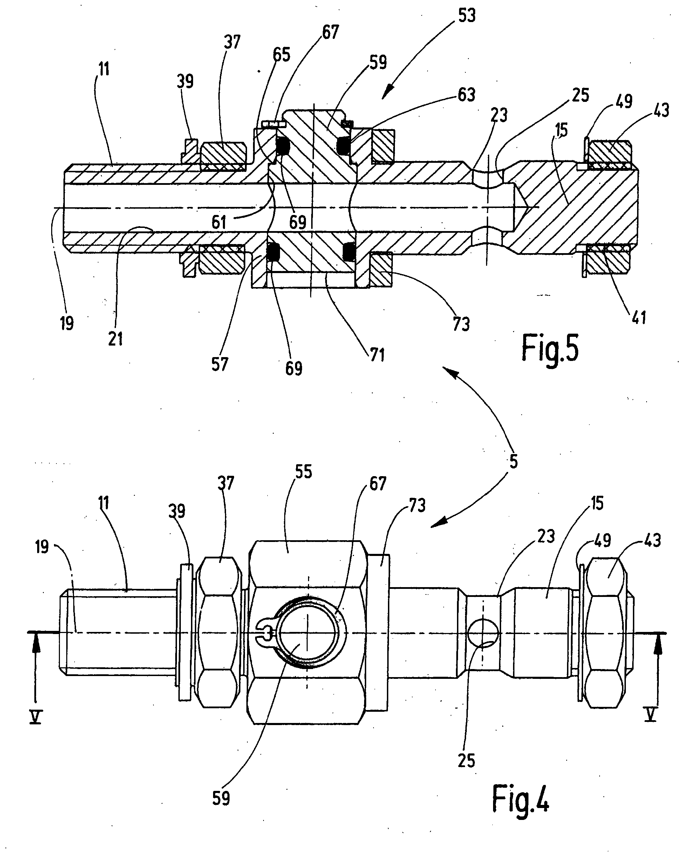

Die durch einen einstückigen Anschlusskörper in Form eines Rotationskörpers gebildeten Fluidverbindungen 5 durchgreifen mit einem dem Steigrohr 7 zugeordneten Endabschnitt 15 jeweils eine Aufnahme 17, die gleich ausgebildet sind und jeweils die Halterung für ein Ende des Steigrohres 7 bilden. In dem Rotationskörper der Fluidverbindungen 5 ist ein zur Längsachse 19 der Fluidverbindungen 5 koaxialer, innerer Fluidkanal 21 gebildet, der sich vom in den Tank 9 ragenden offenen Ende her in Richtung auf den geschlossenen Endabschnitt 15 erstreckt. An diesem Ende des Kanals 21 befindet sich eine ringnutartige Verjüngung 23 (s. Fig. 4), in der eine durchgehende Querbohrung 25 gebildet ist. Bei von der Fluidverbindung 5 durchgriffener Aufnahme 17 sind die Verjüngung 23 und damit die Querbohrung 25 auf einen Querkanal 27 der Aufnahme 17 ausgerichtet, der einen zylindrischen Aufnahmezapfen 29 der Aufnahme 17 durchzieht und den Fluidweg vom Kanal 21 zum Inneren des Steigrohrs 7 fortsetzt. Dabei endet, wie Fig. 2 zeigt, das Ende des Zapfens 27 in einer Stufe 31, so dass am Austritt keine Dichtfläche für einen kugelförmigen Schwimmerkörper 33 gebildet ist. Der Zapfen 29 ist an der Innenseite des Steigrohrs 17 mittels Dichtringen 35 abgedichtet.

Zur Sicherung der Fluidverbindungen 5, die mit ihrem Außengewinde 11 in das Innengewinde der Öffnungen 13 des Tanks 9 eingeschraubt sind, ist auf dem Außengewinde 11 eine Mutter 37 vorgesehen, mittels deren eine Ringscheibendichtung 39 gegen die Tankwand verspannbar ist. An dem entgegengesetzten, geschlossenen Ende weisen die Fluidverbindungen 5 ebenfalls ein Außengewinde 41 für eine Mutter 43 auf, mittels deren ein schalenartiges Außengehäuse 45 an den Aufnahmen 17 festlegbar ist. Das Außengehäuse 45 ist, vorzugsweise aus einem Aluminiumwerkstoff, in Form einer Schale in der aus DE 10 2009 007 655 A1 offenbarten Art und Weise ausgebildet und weist ein sich über einen zentralen Längenabschnitt erstreckendes Sichtfenster 47 auf, durch das ein Anzeigebereich des aus einem durchsichtigen Werkstoff gebildeten Steigrohres 7 visuell beobachtbar ist.

Mittels der Muttern 43 und einer anliegenden Ringscheibe 49 ist das Außengehäuse 45, das vom Endabschnitt 15 der Fluidverbindungen 5 durchgriffene Öffnungen aufweist, an der Aufnahme 17 festgelegt, wobei das Gehäuse 45 an einen den Endabschnitt 15 umgebenden Dichtring 51 angedrückt ist.

Die näheren Einzelheiten der Gestaltung des Rotationskörpers, der die jeweiligen Fluidverbindungen 5 mit jeweils einer zugehörigen Ventileinrichtung 53 bildet, sind am deutlichsten aus den Fig. 4 und 5 entnehmbar. Wie gezeigt, weist die Fluidverbindung 5 etwa im mittleren Längenbereich, an das Ende des Außengewindes 11 anschließend, eine Erweiterung auf, deren Außenseite die Form eines Außensechskants 55 besitzt und das Ventilgehäuse 57 für die Ventileinrichtung 53 bildet. Diese ist als Absperrhahn mit einem bolzenartigen, um 360° im Ventilgehäuse 57 drehbaren Küken 59 mit einer zur Drehachse senkrechten Durchgangsbohrung gebildet. Für das Küken 59 weist das Ventilgehäuse 57 eine zur Längsachse 19 des Kanals 21 senkrechte Bohrung 61 auf, die sich in der Nähe des in Fig. 5 oben liegenden Bohrungsendes an einer Stufe 63 verjüngt. Diese Stufe 63 bildet die Anschlagfläche für eine am Küken 59 gebildete Schulter 65, so dass das Küken 59, wenn es in Fig. 5 von unten her in die Bohrung 61 eingesetzt ist, gegen Bewegung nach oben gesichert ist. Zur Sicherung gegen Verschiebung nach unten ist am aus dem Ventilgehäuse 57 vorstehenden Ende des Kükens 59 ein Seegerring 67 vorgesehen. Innerhalb der Bohrung 61 ist das Küken 59 mittels Dichtringen 69 abgedichtet. Für die Drehbetätigung der Ventileinrichtung 53 ist an dem dem Seegerring 67 entgegengesetzten Ende des Kükens 59 ein vertiefter Eingriffsschlitz 71 für einen Schraubendreher vorgesehen, mittels dessen das Küken 59 in die in den Figuren gezeigte geöffnete Stellung der Ventileinrichtung 53 drehbar oder in die sperrende Stellung verdrehbar ist. An das Ventilgehäuse 57 in Richtung auf den geschlossenen Endabschnitt 15 schließt sich eine Ringscheibe 73 an, die bei dem eingebauten Zustand (Fig. 2 und 3) einen Abstandhalter bildet, über den die Aufnahme 17 des Steigrohres 7 mittels der Mutter 43 gegen das Ventilgehäuse 57 verspannt ist.

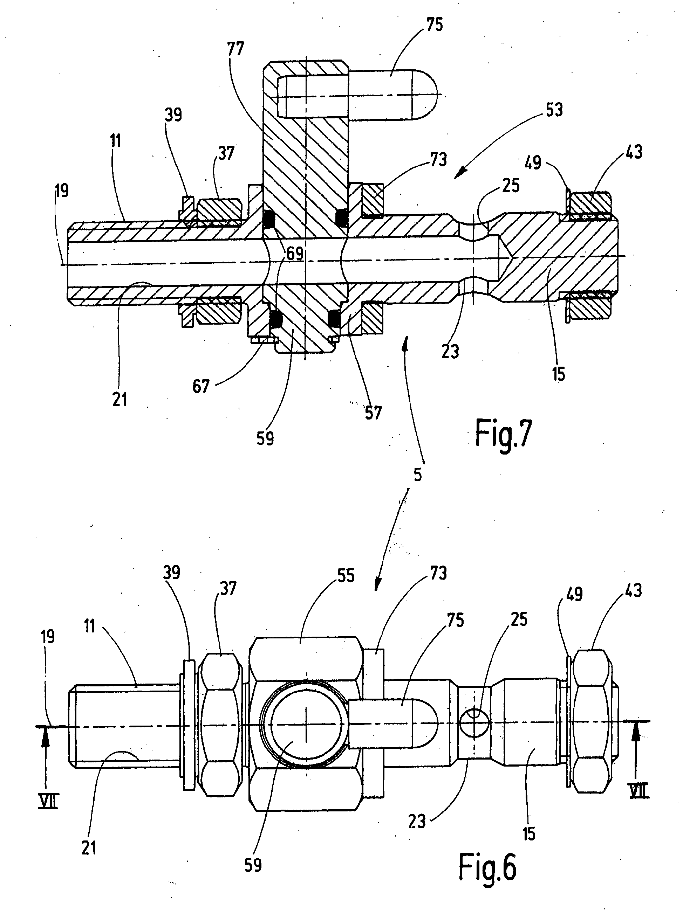

Die Fig. 6 und 7 zeigen ein abgewandeltes Ausführungsbeispiel, das sich gegenüber dem erstbeschriebenen Beispiel lediglich insoweit unterscheidet, als an dem dem Seegerring 67 entgegengesetzten Ende des Kükens 59 kein Eingriffsschlitz 71 vorgesehen ist, sondern ein manuell betätigbarer Drehknebel 75, der sich in Form eines runden Bolzens von einem verlängerten Betätigungsteil 77 des Kükens 59 in zu dessen Drehachse senkrechter Richtung weg erstreckt. Durch die gebildete Verlängerung befindet sich der Drehknebel 75 in einem eine bequeme manuelle Betätigung ermöglichenden Abstand von der Achse 19 der jeweiligen Fluidverbindung 5.

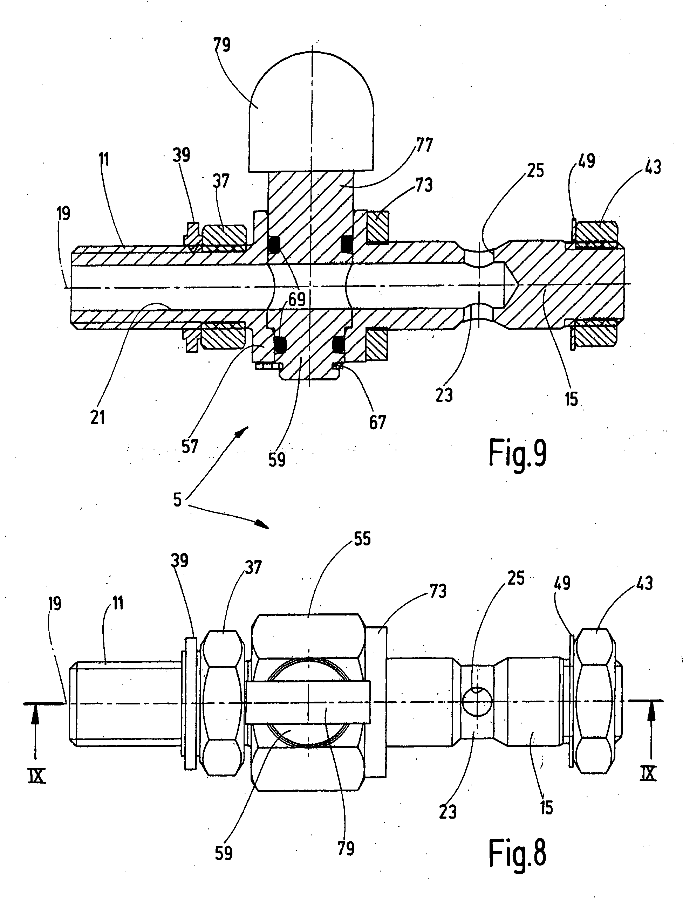

Die Fig. 8 und 9 zeigen eine weitere Abwandlung, bei der am Ende des Betätigungsteils 77 des Kükens 59 eine Griffplatte 79 als Bestandteil des Kükens 59 oder als Anschweißteil vorgesehen ist, wobei die Betätigungsplatte 79 am freien Ende eine halbkreisförmige Abrundung besitzt und sich die Plattenebene bei der gezeigten Offenstellung parallel zur Achse 19 der jeweiligen Fluidverbindung 5 erstreckt.

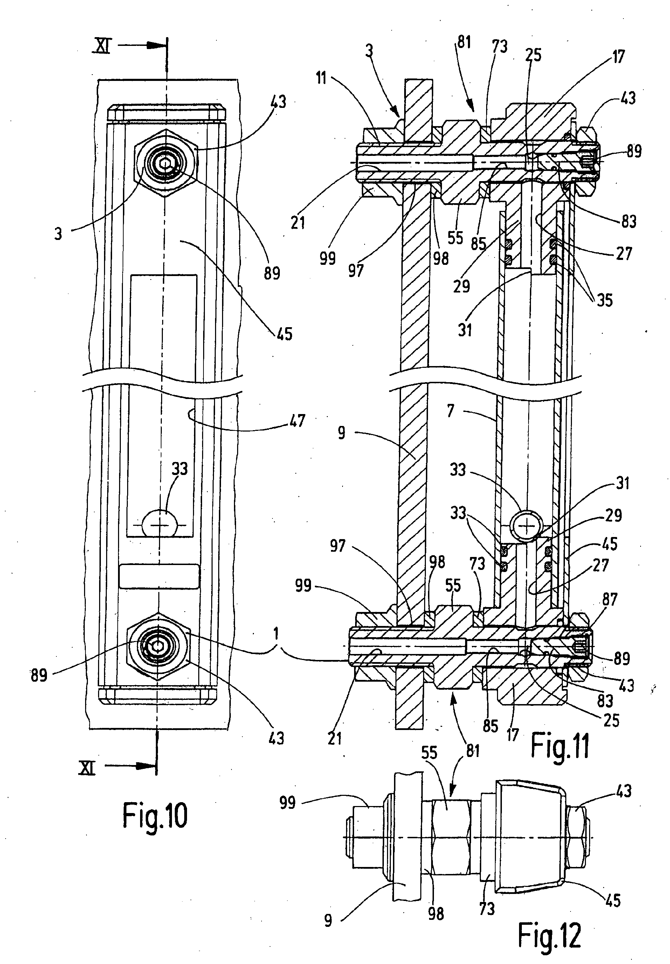

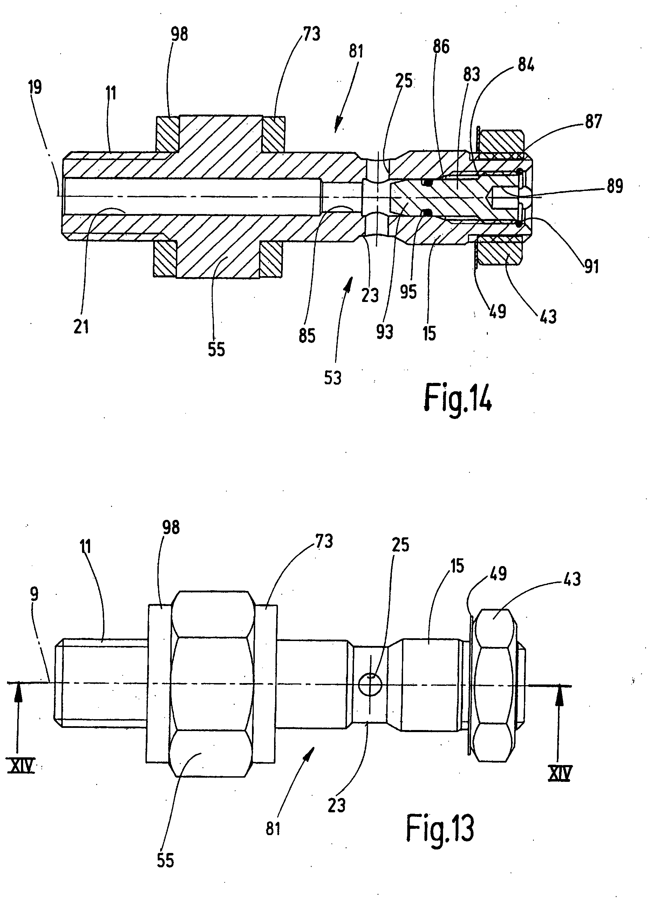

Die Fig. 10 bis 14 zeigen ein nicht erfindungsgemäßes Ausführungsbeispiel, bei dem für den unteren Fluidanschluss 1 und oberen Fluidanschluss 3 wiederum zwei als Gleichteile in Form eines einstückigen Rotationskörpers ausgebildete Fluidverbindungen 81 vorgesehen sind, wobei der Unterschied gegenüber den Fluidverbindungen 5 der zuvor beschriebenen Ausführungsbeispiele darin besteht, dass die Ventileinrichtung anstelle eines einen Bolzenhahn bilden Kükens 59 eine Zustellschraube 83 als Absperrorgan aufweist, die bei einer von außen her durchführbaren, koaxial zur Längsachse 19 der Fluidverbindung 81 verlaufenden Schraubbewegung die Ventilfunktion ausübt. Hierfür weisen die Fluidverbindungen 81 in dem den Außensechskant 55 bildenden Bereich kein Ventilgehäuse auf, stattdessen ist der Kanal 21 mit einem verjüngen Kanalabschnitt 85 bis über den Endabschnitt 15 hinaus nach außen verlängert und weist am Austrittsende ein Innengewinde 87 für die Zustellschraube 83 auf, an deren äußerem, freien Ende sich ein Innensechskant 89 für die Drehbetätigung von außen her befindet. Gegen den Austritt der Zustellschraube 83, die in den Figuren in der geringsten Einschraubtiefe gezeigt ist, befindet sich am äußeren Ende des Innengewindes 87 ein Sprengring 91, s. Fig. 14. Mit ihrem dem Innensechskant 89 entgegengesetzten Schaft 93 bildet die Zustellschraube 83 eine Art Ventilschieber, der mit zunehmender Einschraubtiefe die Querbohrung 25 im verjüngten Kanalabschnitt 85 verschließt und die Ventileinrichtung dadurch in die Sperrstellung bringt. In dieser liegt ein am Übergang zwischen Schaft 93 und äußerem Gewindeabschnitt gebildeter Bund 84 an einer Verengung 86 des Kanalabschnitts 85. In der Schließstellung schließt der Ventilkegel an der zugeordneten Dichtkante. Für die Freigabestellung bildet der Sprengring 91 den Positionsanschlag.

Ein weiterer Unterschied gegenüber den zuvor beschriebenen Beispielen besteht darin, dass an den Tanköffnungen 97, die an den Fluidanschlüssen 1 und 3 von dem das Außengewinde 11 aufweisenden Ende der jeweiligen Fluidverbindung 81 durchgriffen sind, kein Innengewinde gebildet ist. Vielmehr ist hierbei eine Mutter 99 an der Innenseite des Tanks 9 vorgesehen, die den den Außensechskant 55 bildenden verdickten Bereich der Fluidverbindung 81 mit der Wand des Tanks 9 verspannt. Der Behälter oder Tank 9 kann wie gezeigt mit Durchgangsbohrungen aufgeführt sein oder alternativ jeweils einen Gewindeanschluss aufweisen.

Während beim Beispiel der Fig. 10 bis 14 die für die Endpositionen der Zustellschraube 83 zugehörigen Bauteile, nämlich der äußere Seegerring 91 und die Kanalverengung 86, die Offenstellung bzw. die Sperrstellung der Ventileinrichtung signalisieren, ist bei den Ausführungsbeispielen gemäß Fig. 1 bis 9 aus der Orientierung des jeweiligen Betätigungselements, wie dem Eingriffsschlitz 71, des Knebels 75 oder der Betätigungsplatte 79 der jeweilige Betriebszustand der Ventileinrichtung 53 erkennbar, weil, wie die Figuren 1 bis 9 zeigen, diese Betätigungselemente jeweils so angeordnet sind, dass sie bei der Offenstellung parallel zur Längsachse 19 der Fluidverbindung 5 orientiert sind und sich bei der um 90° in der einen oder anderen Drehrichtung demgegenüber verdrehten Sperrstellung in zur Längsachse 19 senkrechter Ausrichtung erstrecken.

## Patentansprüche

1. Vorrichtung zum Anzeigen und/oder Kontrollieren von Fluiden, die in einem Behälter, wie einem eine Tankwand aufweisenden Tank (9), aufnehmbar sind, mit mindestens einem Fluidanschluss (1, 3), der über eine Fluidverbindung (5; 81) in ein Steigrohr (7) mit einem schalenartigen Außengehäuse (45) als Teil der Vorrichtung einmündet, in dem eine, dem Fluidniveau im Behälter entsprechende Anzeige ermöglicht ist, wobei zumindest für den einen Fluidanschluss (1, 3) eine Ventileinrichtung (53) vorhanden ist, mittels deren die vom Fluidanschluss (1, 3) in das Steigrohr (7) führende Fluidverbindung (5; 81) steuerbar ist, wobei die Ventileinrichtung (53) als Absperrhahn mit einem bolzenartigen, in einer Bohrung (61) im Ventilgehäuse (57) drehbaren Küken (59) mit einer zur Drehachse senkrechten Durchgangsbohrung gebildet ist, wobei innerhalb der Bohrung (61) das Küken (59) mittels Dichtringen (69) abgedichtet ist, und wobei die jeweilige Fluidverbindung (5; 81) mit ihren Gehäuseteilen (15) zur Umgebung hin zumindest teilweise abgedichtet in einer ihr zugeordneten Aufnahme (17) geführt ist, **dadurch gekennzeichnet, dass** das Küken (59) um 360° in der Bohrung (61) im Ventilgehäuse (57) drehbar ist, dass zur Sicherung gegen Verschieben für ein aus dem Ventilgehäuse (57) vorstehendes Ende des Kükens (59) ein Seegering (67) vorgesehen ist, dass die jeweilige Fluidverbindung (5; 81) mit ihren Gehäuseteilen (15) die jeweilige Aufnahme (17) für das Steigrohr (7) vollständig durchgreift, und dass die Fluidverbindung (5) an einem zu der Tankwand entgegengesetzten, geschlossenen Ende ein Außengewinde (41) mit einer Mutter (43) aufweist mittels deren das schalenartige Außengehäuse (45) an der Aufnahme (17) festgelegt ist.

2. Vorrichtung nach Anspruch 1, **dadurch gekennzeichnet, dass** das Ende der Bohrung (61) sich an einer Stufe (63) verjüngt, die eine Anschlagfläche für eine am Küken (59) gebildete Schulter (65) ausbildet.

3. Vorrichtung nach einem der vorstehenden Ansprüche, **dadurch gekennzeichnet, dass** zum Bewegen des Kükens (59) des Absperrhahns ein von außen her, von Hand betätigbarer Knebel (75, 77) oder ein mittels eines Betätigungswerkzeuges zu betätigendes Angriffsmittel (71) vorhanden ist.

4. Vorrichtung nach einem der vorstehenden Ansprüche, **dadurch gekennzeichnet, dass** der Absperrhahn zwischen einer Behälterwand (9) des Behälters und der zuordenbaren Aufnahme (83) für das Steigrohr (7) angeordnet ist oder dass die Zustellschraube (83) für Bewegungen im Ventilgehäuse (15) von der Seite des Steigrohres (7) her betätigbar ist, die dieser Behälterwand (9) abgewandt ist.

5. Vorrichtung nach einem der vorstehenden Ansprüche, **dadurch gekennzeichnet, dass** auf beiden gegenüberliegenden Seiten des Steigrohres (7) je eine Aufnahme (17) vorhanden ist, die jeweils eine Ventileinrichtung (53) zumindest teilweise trägt.

6. Vorrichtung nach einem der vorstehenden Ansprüche, **dadurch gekennzeichnet, dass** die jeweilige Fluidverbindung (5; 81) aus einem im Ventilgehäuse (15; 57) geführten Längskanal (21; 85) besteht, in den ein Querkanal (27) der Aufnahme (17) für das Steigrohr (7) einmündet.

7. Vorrichtung nach einem der vorstehenden Ansprüche, **dadurch gekennzeichnet, dass** das Steigrohr (7) einen Schwimmer (33) aufweist, der abhängig vom Fluidniveau im Behälter (5) seine Höhenlage im Steigrohr (7) ändert und derart eine Anzeige und/oder Kontrolle dieses Fluidniveaus im Behälter (9) ermöglicht.

## Claims

1. A device for displaying and/or controlling fluids which can be received in a container, such as a tank (9) that has a tank wall, comprising at least one fluid port (1, 3) which leads via a fluid connection (5; 81) into a riser pipe (7) with a shell-like outer housing (45) as part of the device, in which shell-like outer housing (45) a display corresponding to the fluid level in the container is made possible, a valve device (53) being provided at least for the one fluid port (1, 3), by means of which valve device the fluid connection (5; 81) leading from the fluid port (1, 3) into the riser pipe (7) can be controlled, the valve device (53) being in the form of a shut-off cock with a bolt-like cock plug (59) that can rotate in a borehole (61) within the valve housing (57) and having a through hole perpendicular to the axis of rotation, the cock plug (59) being sealed within the borehole (61) by means of sealing rings (69), and the respective fluid connection (5; 81), with its housing parts (15), being at least partially sealed off from the surroundings in a retainer (17) assigned to it, **characterised in that** the cock plug (59) can be rotated about 360° in the borehole (61) within the valve housing (57), that a locking ring (67) is provided for an end of the cock plug (59) projecting from the valve housing (57) to protect against displacement, that the respective fluid connection (5; 81), with its housing parts (15), completely passes through the respective retainer (17) for the riser pipe (7), and that at a closed end opposite the tank wall the fluid connection (5) has an external thread (41) with a nut (43) by means of which the shell-like outer housing (45) is affixed to the retainer (17).

2. The device according to Claim 1, **characterised in that** the end of the borehole (61) tapers on a step (63) which forms a stop surface for a shoulder (65) formed on the cock plug (59).

3. The device according to any of the preceding claims, **characterised in that** a handle (75, 77) that can be manipulated by hand from the outside or a grasping means (71) to be manipulated by means of an actuation tool is provided to move the cock plug (59) of the shut-off cock.

4. The device according to any of the preceding claims, **characterised in that** the shut-off cock is disposed between a container wall (9) of the container and the assignable retainer (83) for the riser pipe (7), or that the adjusting screw (83) for movements in the valve housing (15) can be manipulated from the side of the riser pipe (7) which faces away from this container wall (9).

5. The device according to any of the preceding claims, **characterised in that** a retainer (17) is respectively provided on both opposing sides of the riser pipe (7), which respective retainer at least partially supports a valve device (53).

6. The device according to any of the preceding claims, **characterised in that** the respective fluid connection (5; 81) consists of a longitudinal channel (21; 85) guided within the valve housing (15; 57), into which longitudinal channel a transverse channel (27) of the retainer (17) for the riser pipe (7) leads.

7. The device according to any of the preceding claims, **characterised in that** the riser pipe (7) has a float (33) which changes its elevation within the riser pipe (7) depending on the fluid level within the container (5) and thus enables display and/or control of this fluid level within the container (9).

## Revendications

1. Dispositif pour indiquer et/ou contrôler des fluides, qui peuvent être reçus dans un récipient, comme une cuve (9) ayant une paroi, comprenant au moins un raccord (1, 3) pour du fluide, qui débouche, en tant que partie du dispositif, par l'intermédiaire d'une liaison (5; 81) pour du fluide dans un tuyau (7) montant, ayant une enveloppe (45) extérieure de type en coque, dans laquelle une indication correspondant au niveau du fluide dans le récipient est rendue possible, dans lequel il est prévu, au moins pour le un raccord (1, 3) pour du fluide, un dispositif (53) de vanne, au moyen duquel la liaison (5; 81) pour du fluide menant du raccord (1, 3) pour du fluide au tuyau (7) montant peut être commandée, le dispositif (53) de vanne étant sous la forme d'un robinet d'arrêt ayant un boisseau (59) de type en axe, tournant dans un alésage (51) du corps (57) de vanne et ayant un alésage traversant perpendiculaire à l'axe de rotation, dans lequel dans l'alésage (61), le boisseau (59) est rendu étanche au moyen de joints (69), et dans lequel la liaison (5; 81) respective pour du fluide, avec ses parties (15) d'enveloppe, rendue étanche au moins en partie par rapport à l'atmosphère, passe dans un logement (17) qui lui est associé, **caractérisé en ce que** le boisseau (59) peut tourner de 360° dans l'alésage (61) du corps (57) de la soupape, **en ce que** pour empêcher un déplacement d'une extrémité, en saillie du corps (57) de la soupape, du boisseau (59) est prévu un jonc (67) élastique, **en ce que** la liaison (5; 81) respective pour du fluide passe complètement, avec ses parties (15) d'enveloppe, dans le logement (17) respectif pour le tuyau (7) montant, et **en ce que** la liaison (5) pour du fluide a, à une extrémité fermée, opposée à la paroi de la cuve, un filetage (41) extérieur, avec un écrou (43), au moyen duquel l'enveloppe (45) extérieure de type en coque est fixée au logement (17) .

2. Dispositif suivant la revendication 1, **caractérisé en ce que** l'extrémité de l'alésage (61) se rétrécit en un gradin (63), qui constitue une surface de butée pour un épaulement (65) formé sur le boisseau.

3. Dispositif suivant l'une des revendications précédentes, **caractérisé en ce que** pour déplacer le boisseau (59) du robinet d'arrêt, il est prévu un levier (75, 77) pouvant être actionné de l'extérieur à la main ou un moyen (71) d'attaque à actionner au moyen d'un outil d'actionnement.

4. Dispositif suivant l'une des revendications précédentes, **caractérisé en ce que** le robinet d'arrêt est disposé entre une paroi (9) du récipient et le logement (83) pouvant être associé pour le tuyau (7) montant, ou **en ce que** la vis (83) de réglage peut, pour des déplacements dans le corps (15) de la vanne, être actionnée par le côté du tuyau (7) montant, qui est éloigné de cette paroi (9) du récipient.

5. Dispositif suivant l'une des revendications précédentes, **caractérisé en ce que**, sur deux côtés opposés du tuyau (7) montant, il y a respectivement un logement (17), qui porte au moins en partie, respectivement, un dispositif (53) de vanne.

6. Dispositif suivant l'une des revendications précédentes, **caractérisé en ce que** la liaison (5; 81) respective pour du fluide est constituée d'un conduit (21; 85) longitudinal, qui passe dans le corps (15; 57) de la vanne et dans lequel débouche un conduit (27) transversal du logement (17) pour le tuyau (7) montant.

7. Dispositif suivant l'une des revendications précédentes, **caractérisé en ce que** le tuyau (7) montant a un flotteur (33), qui, en fonction du niveau du fluide dans le récipient (5), modifie sa position en hauteur dans le tuyau (7) montant et rend ainsi possible un affichage et/ou un contrôle de ce niveau de fluide dans le récipient (9).
